# EUROPEAN PATENT APPLICATION

(11) **EP 3 629 199 A1**
(43) Date of publication of application: **01.04.2020**
(21) Application number: 19186787.8
(22) Date of filing: 17.07.2019
(51) Int. Cl.: G06F 16/9535

(54) **METHOD AND DEVICE FOR PUSHING INFORMATION**

(30) Priority: 30.09.2018 CN 201811162634
(71) Applicant: Beijing Xiaomi Mobile Software Co., Ltd., Beijing 100085 (CN)
(72) Inventor: CUI, Qiqi, Beijing, Beijing 100085 (CN); XIE, Yan, Beijing, Beijing 100085 (CN)
(74) Representative: dompatent von Kreisler Selting Werner - Partnerschaft von Patent- und Rechtsanwälten mbB

(57) **Abstract**

The present invention relates to a method and a device for pushing information. The method includes: acquiring push feature information from a master push terminal; acquiring to-be-pushed information associated with the master push terminal according to the push feature information; and sending the to-be-pushed information to a slave push terminal, and causing the slave push terminal to display the to-be-pushed information, wherein the slave push terminal is associated with the master push terminal. The technical solution can allow the user of the slave terminal to learn about the information associated with the user of the master push terminal, and can improve the user experience.

## Description

### TECHNICAL FIELD

The present invention relates to the technical field of communication, and more particularly to a method and a device for pushing information.

### BACKGROUND

With the development of communication technology, mobile phones are more and more widely used. Users can use mobile phones to make voice calls, send texts or pictures through instant messaging software installed on mobile phones, and use the mobile phones to browse news and other articles of interest online. In the related art, in order to facilitate the user to browse the information of interest to the user, the keyword of the content of interest to the user may be set through the mobile phone, and the mobile phone may download the corresponding information (i.e., the information that matches the user's preference) from the server according to the keyword, and display the information that matches the user's preference to the user.

Although the above solution can make it more convenient for the user to browse the information of interest, when the user is more concerned about other users and wants to obtain information related to the other users, the above solution cannot obtain and display such information, thereby failing to provide the desired information to the user. For example, when parents are more concerned about their children, the mobile phone used by the parent cannot automatically obtain and display information related to the child to the parent, thereby affecting the user experience.

### SUMMARY

This Summary is provided to introduce a selection of aspects of the present invention in a simplified form that are further described below in the Detailed Description. This Summary is not intended to identify key features or essential features of the claimed subject matter, nor is it intended to be used to limit the scope of the claimed subject matter.

According to a first aspect of the embodiments of the present invention, there is provided a method for pushing information, including:
acquiring push feature information from a master push terminal;
acquiring to-be-pushed information associated with the master push terminal according to the push feature information; and
sending the to-be-pushed information to a slave push terminal, and causing the slave push terminal to display the to-be-pushed information, wherein the slave push terminal is associated with the master push terminal.

The technical solution provided by the embodiment of the present invention comprises acquiring push feature information from a master push terminal, acquiring to-be-pushed information associated with the master push terminal according to the push feature information, and sending the to-be-pushed information to a slave push terminal associated with the master push terminal and causing the slave push terminal to display the to-be-pushed information. Since the above associated information may be understood as information associated with the user of the master push terminal, the above solution can allow the user of the slave terminal to learn about the information associated with the user of the master push terminal, and thus improve the user experience.

In an embodiment, the push feature information includes at least one of: location information of the master push terminal, personal information of the user of the master push terminal, and other feature information input by the user of the master push terminal.

In an embodiment, the personal information of the user of the master push terminal includes one or more of: an occupation of the user of the master push terminal, a company of the user of the master push terminal, a motion state of the user of the master push terminal, and social information of the user of the master push terminal.

In an embodiment, acquiring to-be-pushed information associated with the master push terminal according to the push feature information includes:
periodically searching for real-time news associated with the push feature information, and taking the real-time news as to-be-pushed information.

In an embodiment, acquiring to-be-pushed information associated with the master push terminal according to the push feature information includes:
sending an updated information retrieval instruction to the master push terminal, to instruct the master push terminal to retrieve updated information associated with the push feature information in the master push terminal in response to the updated information retrieval instruction, and sending the updated information to a server; and
receiving the updated information from the master push terminal and taking the updated information as the to-be-pushed information.

In an embodiment, sending the to-be-pushed information to a slave push terminal includes:
receiving a confirmation push instruction from the master push terminal; and
sending the to-be-pushed information to the slave push terminal in response to the confirmation push instruction.

In an embodiment, the method for pushing information further includes:
sending the to-be-pushed information to the master push terminal, and causing the master push terminal to display the to-be-pushed information;
receiving a screening instruction from the master push terminal;
screening the to-be-pushed information according to the screening instruction, and updating the to-be-pushed information according to the screening result; and
sending the to-be-pushed information to a slave push terminal includes:
   sending the updated to-be-pushed information to the slave push terminal.

According to a second aspect of the embodiments of the present invention, there is provided a device for pushing information, including:
a push-feature acquiring module configured to acquire push feature information from a master push terminal;
a to-be-pushed-information acquiring module configured to acquire to-be-pushed information associated with the master push terminal according to the push feature information; and
a to-be-pushed-information sending module configured to send the to-be-pushed information to a slave push terminal, and cause the slave push terminal to display the to-be-pushed information, wherein the slave push terminal is associated with the master push terminal.

In an embodiment, the push feature information includes at least one of: location information of the master push terminal, personal information of the user of the master push terminal, and other feature information input by the user of the master push terminal.

In an embodiment, the personal information of the user of the master push terminal includes one or more of: an occupation of the user of the master push terminal, a company of the user of the master push terminal, a motion state of the user of the master push terminal, and social information of the user of the master push terminal.

In an embodiment, the to-be-pushed-information acquiring module includes:
a to-be-pushed-information acquiring sub-module configured to periodically search for real-time news associated with the push feature information, and take the real-time news as to-be-pushed information.

In an embodiment, the to-be-pushed-information acquiring module includes:
an updated-information-retrieval-instruction sending sub-module configured to send an updated information retrieval instruction to the master push terminal, to instruct the master push terminal to retrieve updated information associated with the push feature information in the master push terminal in response to the updated information retrieval instruction, and send the updated information to a server; and
an updated-information receiving sub-module configured to receive the updated information from the master push terminal and take the updated information as the to-be-pushed information.

In an embodiment, the to-be-pushed-information sending module includes:
a confirmation-push-instruction receiving sub-module configured to receive a confirmation push instruction from the master push terminal; and
a confirmation-push-instruction responding sub-module configured to send the to-be-pushed information to the slave push terminal in response to the confirmation push instruction.

In an embodiment, the device for pushing information further includes:
a to-be-pushed-information displaying module configured to send the to-be-pushed information to the master push terminal, and cause the master push terminal to display the to-be-pushed information;
a screening-instruction receiving module configured to receive a screening instruction from the master push terminal;
a to-be-pushed-information screening module configured to screen the to-be-pushed information according to the screening instruction, and update the to-be-pushed information according to the screening result; and
the to-be-pushed-information sending module includes:
   a to-be-pushed-information sending sub-module configured to send the updated to-be-pushed information to the slave push terminal.

According to a third aspect of the embodiments of the present invention, there is provided a device for pushing information, including:
a processor; and
a memory for storing instructions executable by the processor,
wherein the processor is configured to:
   acquire push feature information from a master push terminal;
   acquire to-be-pushed information associated with the master push terminal according to the push feature information; and
   send the to-be-pushed information to a slave push terminal, and cause the slave push terminal to display the to-be-pushed information, wherein the slave push terminal is associated with the master push terminal.

According to a fourth aspect of the embodiments of the present invention, there is provided a computer readable storage medium having stored thereon computer instructions, wherein the instructions are executed by a processor to perform the steps of the method of any one of the first aspect the embodiments of the present invention.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the specification, serve to explain the principles of the invention.
FIG. 1 is a diagram illustrating an application scene of a method for pushing information according to an exemplary embodiment;
FIG. 2A is a flow chart of a method for pushing information according to an exemplary embodiment;
FIG. 2B is a flow chart of a method for pushing information according to an exemplary embodiment;
FIG. 2C is a flow chart of a method for pushing information according to an exemplary embodiment;
FIG. 3A is a block diagram of a device for pushing information according to an exemplary embodiment;
FIG. 3B is a block diagram of a device for pushing information according to an exemplary embodiment;
FIG. 3C is a block diagram of a device for pushing information according to an exemplary embodiment;
FIG. 3D is a block diagram of a device for pushing information according to an exemplary embodiment;
FIG. 3E is a block diagram of a device for pushing information according to an exemplary embodiment;
FIG. 4 is a block diagram of a device according to an exemplary embodiment; and
FIG. 5 is a block diagram of a device according to an exemplary embodiment.

The specific aspects of the present invention, which have been illustrated by the accompanying drawings described above, will be described in detail below. These accompanying drawings and description are not intended to limit the scope of the present invention in any manner, but to explain the concept of the present invention to those skilled in the art via referencing specific aspects.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

With the rapid development of science and technology and the continuous improvement of people's living standards, in recent years, mobile communication terminals such as mobile phones are used more and more widely. Users can use mobile phones to make voice calls, send texts or pictures through instant messaging software installed on mobile phones, and use the mobile phones to browse news and other articles of interest online.

In the related art, in order to facilitate the user to browse the information of interest to the user while using the mobile phone, the keyword of the content of interest to the user may be set through the mobile phone, and the mobile phone may download the corresponding information (i.e., the information that matches the user's preference) from the server according to the keyword, and display the information that matches the user's preference to the user.

Although the above solution can make the user more convenient to browse the information of interest, when the user is more concerned about other users and wants to obtain information related to the other users, the above solution cannot obtain and display such information, thereby failing to make the user to learn about such information. For example, when parents are more concerned about their children, the mobile phone used by the parent cannot automatically obtain and display information related to the child to the parent, thereby affecting the user experience.

In order to solve the above problems, the technical solution provided by the embodiment of the present invention recites that acquiring push feature information from a master push terminal, acquiring to-be-pushed information associated with the master push terminal according to the push feature information, and sending the to-be-pushed information to a slave push terminal associated with the master push terminal and causing the slave push terminal to display the to-be-pushed information. Since the above associated information may be understood as information associated with the user of the master push terminal, the above solution can allow the user of the slave terminal to learn about the information associated with the user of the master push terminal, and thus improve the user experience.

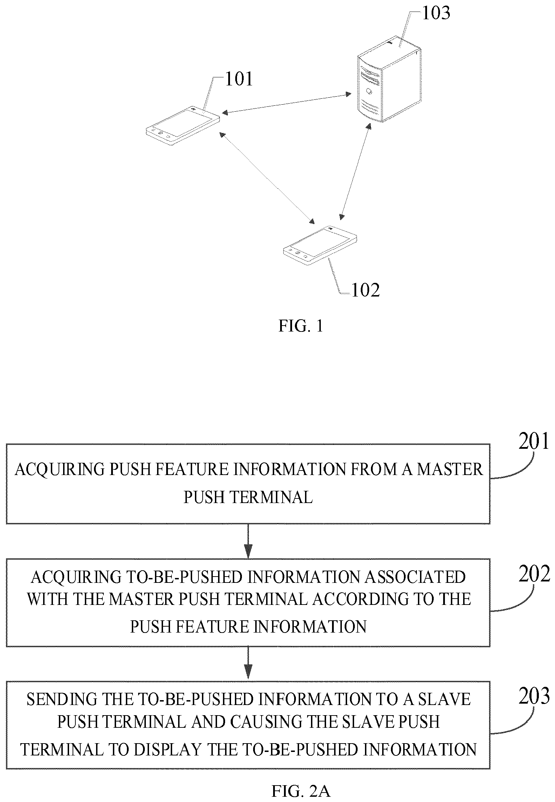

The technical solution provided by the embodiment of the present invention relates to three entities as shown in FIG. 1: a master push terminal 101, a slave push terminal 102, and a server 103, wherein the master push terminal 101 and the slave push terminal 102 can be a mobile phone, a tablet computer, a mart wearable device, etc. The master push terminal 101 and the slave push terminal 102 can establish a data connection through a wireless communication network. The server 103 may be a device that provides a computing service, which device is provided and used by the information push service provider, or may be a device that provides a computing service, which device is used by the information push service provider and provided by the network operator. The server 101 establishes a data connection with the master push terminal 101 and the slave push terminal 102 via the wireless communication network, respectively.

An embodiment of the present invention provides a method for pushing information. The method is applied to a server, and as shown in FIG. 2A, includes the following steps 201 to 203.

In step 201, push feature information is acquired from a master push terminal.

For example, the push feature information may include at least one of location information of the master push terminal, personal information of the user of the master push terminal, and other feature information input by the user of the master push terminal. The personal information of the user of the master push terminal may include one or more of the occupation of the user of the master push terminal, the company of the user of the master push terminal, the motion state of the user of the master push terminal, and the social information of the user of the master push terminal.

The location information of the master push terminal may include the location coordinates of the master push terminal, or may be the name of the region where the master push terminal is located, wherein the region where the master push terminal is located may be understood as an administrative region (country, province, city, administrative district, etc.), or may be also be understood as an attraction scene, a building, a shop, or a road. Acquiring the location information of the master push terminal, may be acquiring the current location coordinates of the master push terminal or acquiring location coordinates of the master push terminal within a certain period of time, through positioning means, such as a Global Positioning System (GPS), provided on the master push terminal, and acquiring the location information of the master push terminal according to the acquired location coordinates.

The motion state information of the master push terminal may include a motion direction of the master push terminal, a motion speed of the master push terminal, and the like. Acquiring the location information of the master push terminal may be acquiring location coordinates of the master push terminal within a certain period of time, through positioning means, such as a Global Positioning System (GPS), provided on the master push terminal, and acquiring the motion state information of the master push terminal according to the acquired location coordinates within a certain period of time. Acquiring the location information of the master push terminal may also be acquiring the motion state information of the master push terminal through a motion state sensor provided on the master push terminal, such as an angular velocity sensor, an acceleration sensor, or the like.

For example, acquiring the push feature information may be: acquiring a motion track of the master push terminal in a preset time period, and acquiring at least one of the location information of the master push terminal and the motion state information of the master push terminal according to the motion track, and generating the push feature information according to at least one of the location information of the master push terminal and the motion state information of the master push terminal.

It should be noted that the preset time period may be preset, or may be a preset time period for acquiring user input through a human-machine interaction device such as a microphone, a touch screen, a keyboard, or the like provided on the master push terminal.

A feature keyword may include a plurality of sets of characters, each set of characters including one or more characters. Acquiring the push feature information may include: acquiring a push feature keyword input by the user, and generating the push feature information according to the push feature keyword. For example, a push feature keyword input by a user of the master push terminal can be acquired by a human-machine interaction device such as a microphone, a touch screen, or a keyboard provided on the master push terminal. Acquiring the push feature information may also be automatically generating a push feature keyword according to the usage habit of the user of the master push terminal. For example, the master push terminal reads at least one of a browsing record of a user of the master push terminal or an input record of a user of the master push terminal, identifies, in the browsing record and the input record, a character with an appearance rate satisfying a preset requirement, and determines the character as a feature keyword. Machine learning may be performed for the browsing record and the input record can also be learned by a machine, and a feature keyword is determined based on result of the machine learning.

It should be noted that the master push terminal and the slave push terminal may be freely set by the user. Alternatively, they may be automatically matched by either party according to use records of the address book, the communication record or the chat tool, and have the relationship determined according to the matching result. For example, the user may determine the relationship between the two by entering the mobile phone number into the terminal of either party, or by logging in to the relevant page provided by the communication service provider or the push service provider.

In step 202, to-be-pushed information associated with the master push terminal is acquired according to the push feature information.

For example, the to-be-pushed information associated with the master push terminal being acquired according to the push feature information, may be that the server performs a search according to the push feature information to obtain the to-be-pushed information associated with the master push terminal. For example, the server may periodically search for real-time news associated with the push feature information, and take the real-time news as to-be-pushed information.

Also, the to-be-pushed information associated with the master push terminal being acquired according to the push feature information may be performing a search by the server or the master push terminal to determine the to-be-pushed information, and acquiring the to-be-pushed information from the master push terminal. For example, the server may send an updated information retrieval instruction to the master push terminal, to instruct the master push terminal to retrieve the updated information associated with the push feature information in the master push terminal in response to the updated information retrieval instruction, and send the updated information to the server. The server receives the updated information from the master push terminal and takes the updated information as the to-be-pushed information.

For example, when the location information of the master push terminal indicates that the master push terminal is located in Haidian District of Beijing, and the push feature keywords include weather, walking steps, and news, the slave push terminal can acquire weather forecast of the Haidian District of Beijing for the next three days (the specific time can be set as desired by the user), the news about the Haidian District of Beijing in the past week, and the number of walking steps, which is detected by the master push terminal, of the user of the master push terminal in the last 24 hours.

In step 203, the to-be-pushed information is sent to a slave push terminal, and the slave push terminal is caused to display the to-be-pushed information.

The slave push terminal is associated with the master push terminal.

In the technical solution provided by the embodiment of the present invention, it recites that acquiring push feature information from a master push terminal, acquiring to-be-pushed information associated with the master push terminal according to the push feature information, and sending the to-be-pushed information to a slave push terminal associated with the master push terminal and causing the slave push terminal to display the to-be-pushed information. Since the above associated information may be understood as information associated with the user of the master push terminal, the above solution can allow the user of the slave terminal to learn about the information associated with the user of the master push terminal, and thus improve the user experience.

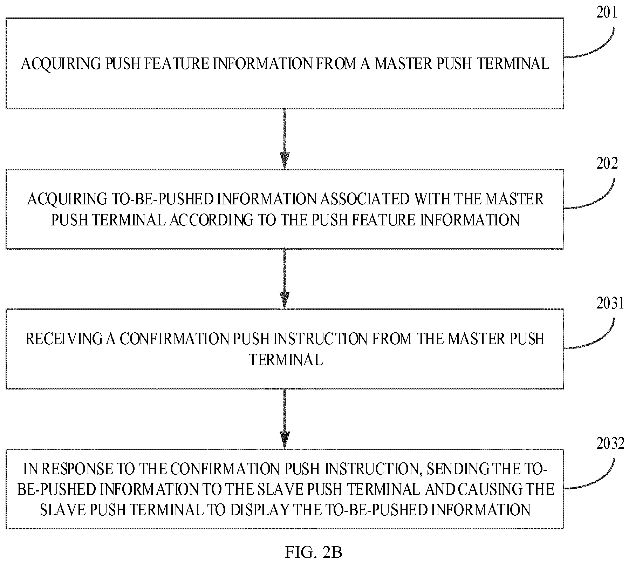

In an embodiment, as shown in FIG. 2B, in step 203, the sending the to-be-pushed information to the slave push terminal, and causing the slave push terminal to display the to-be-pushed information may be implemented through steps 2031 to 2032.

In step 2031, a confirmation push instruction is received from the master push terminal.

In step 2032, in response to the confirmation push instruction, the to-be-pushed information is sent to the slave push terminal, and the slave push terminal is caused to display the to-be-pushed information.

By receiving the confirmation push instruction from the master push terminal and in response to the confirmation push instruction, sending the to-be-pushed information to the slave push terminal, and causing the slave push terminal to display the to-be-pushed information, it can ensure that the user of the master push terminal can confirm the to-be-pushed information before sending the to-be-pushed information to the slave push terminal, and it can reduce the probability of sending wrong to-be-pushed information to the slave push terminal and thus improve the user experience.

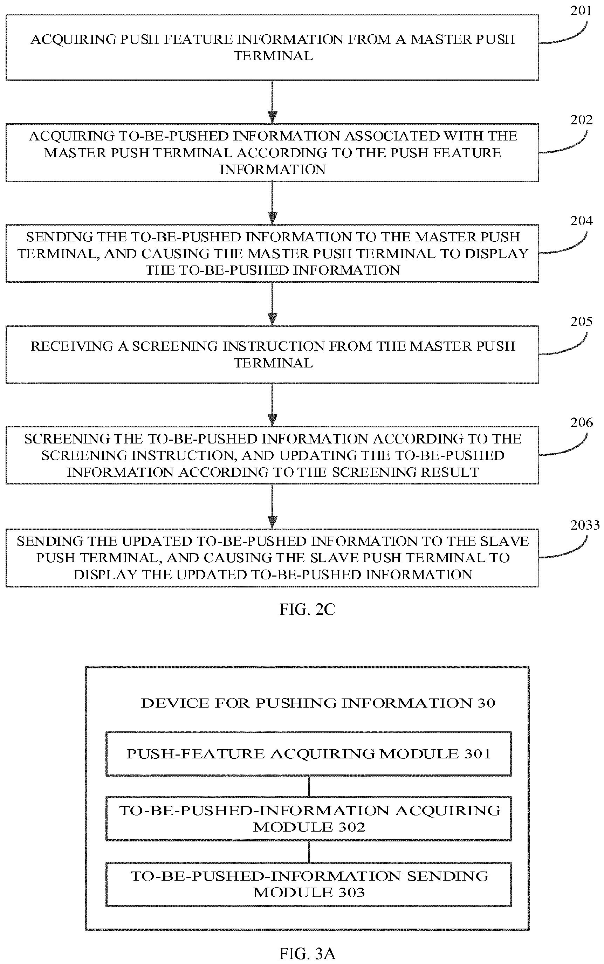

In one embodiment, as shown in FIG. 2C, the method further includes steps 204 to 206.

In step 204, the to-be-pushed information is sent to the master push terminal, and the master push terminal is caused to display the to-be-pushed information.

In step 205, a screening instruction is received from the master push terminal.

In step 206, the to-be-pushed information is screened (e.g., inspected for sensitive or private information) according to the screening instruction, and the to-be-pushed information is updated according to the screening result.

In step 203, the to-be-pushed information is sent to the slave push terminal, and the slave push terminal is caused to display the to-be-pushed information. This can be implemented through step 2033.

In step 2033, the updated to-be-pushed information is sent to the slave push terminal, and the slave push terminal is caused to display the updated to-be-pushed information.

By sending the to-be-pushed information to the master push terminal, causing the master push terminal to display the to-be-pushed information, receiving a screening instruction from the master push terminal, screening the to-be-pushed information according to the screening instruction for the to-be-pushed information, sending the updated to-be-pushed information to the slave push terminal, and causing the slave push terminal to display the updated to-be-pushed information, it can ensure that the user of the master push terminal can screen the information to be shared to the slave push terminal, and it can avoid leaking privacy of the user of the master push terminal and thus improve the user experience.

The following is a device embodiment of the present invention, which may be used to implement the method embodiments of the present invention.

FIG. 3A is a block diagram of a device 30 for pushing information according to an exemplary embodiment. The device 30 for pushing information may be a terminal or a part of the terminal, and the device 30 for pushing information may be implemented as part or all of an electronic device by software, hardware or a combination of the two. As shown in FIG. 3A, the device 30 for pushing information includes:
a push-feature acquiring module 301 configured to acquire push feature information from a master push terminal;
a to-be-pushed-information acquiring module 302 configured to acquire to-be-pushed information associated with the master push terminal according to the push feature information; and
a to-be-pushed-information sending module 303 configured to send the to-be-pushed information to a slave push terminal, and cause the slave push terminal to display the to-be-pushed information, wherein the slave push terminal is associated with the master push terminal.

In an embodiment, the push feature information includes at least one of location information of the master push terminal, personal information of the user of the master push terminal, and other feature information input by the user of the master push terminal.

In an embodiment, the personal information of the user of the master push terminal includes one or more of an occupation of the user of the master push terminal, a company of the user of the master push terminal, a motion state of the user of the master push terminal, and social information of the user of the master push terminal.

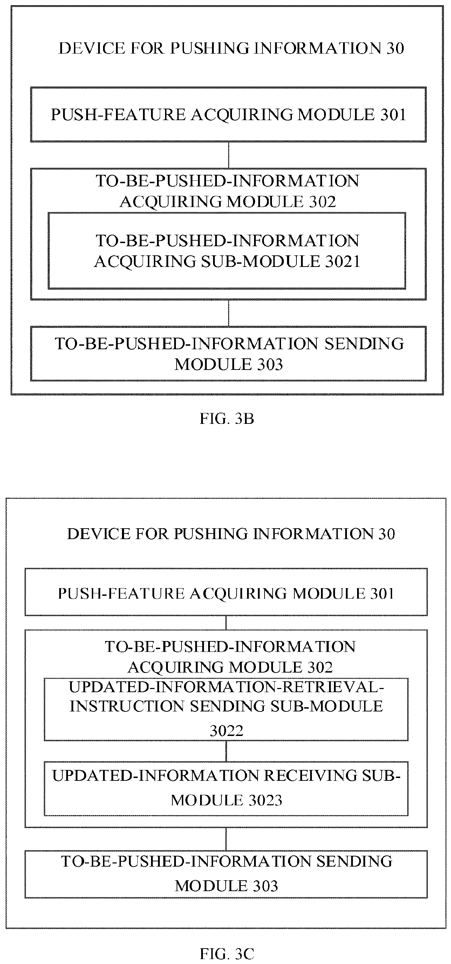

In an embodiment, as shown in FIG. 3B, the to-be-pushed-information acquiring module 302 includes:
a to-be-pushed-information acquiring sub-module 3021 configured to periodically search for real-time news associated with the push feature information, and take the real-time news as to-be-pushed information.

In an embodiment, as shown in FIG. 3C, the to-be-pushed-information acquiring module 302 includes:
an updated-information-retrieval-instruction sending sub-module 3022 configured to send an updated information retrieval instruction to the master push terminal, to instruct the master push terminal to retrieve updated information associated with the push feature information in the master push terminal in response to the updated information retrieval instruction, and send the updated information to a server; and
an updated-information receiving sub-module 3023 configured to receive the updated information from the master push terminal and take the updated information as the to-be-pushed information.

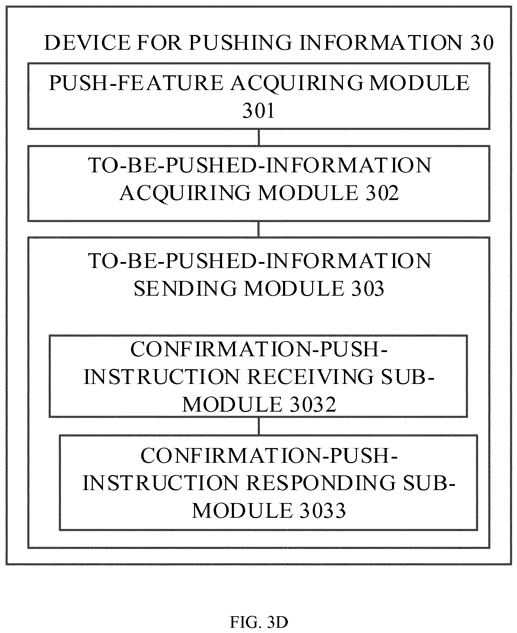

In an embodiment, as shown in FIG. 3D, the to-be-pushed-information sending module 303 includes
a confirmation-push-instruction receiving sub-module 3032 configured to receive a confirmation push instruction from the master push terminal; and
a confirmation-push-instruction responding sub-module 3033 configured to send the to-be-pushed information to the slave push terminal in response to the confirmation push instruction.

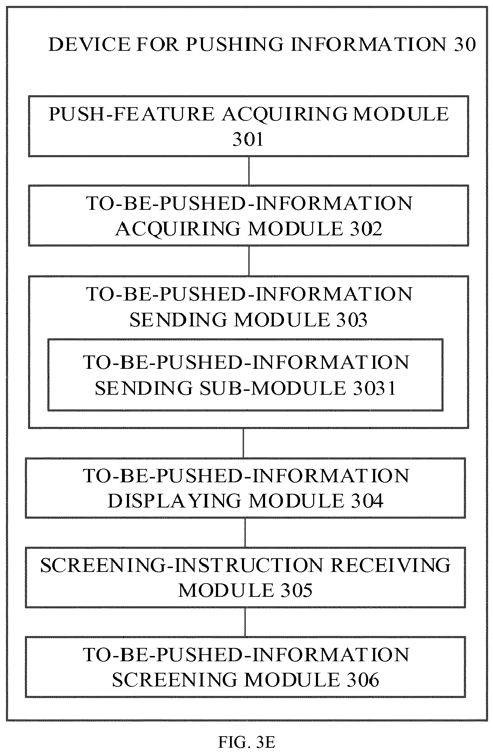

In an embodiment, as shown in FIG. 3E, the device 30 for pushing information further includes:
a to-be-pushed-information displaying module 304 configured to send the to-be-pushed information to the master push terminal, and cause the master push terminal to display the to-be-pushed information;
a screening-instruction receiving module 305 configured to receive a screening instruction from the master push terminal;
a to-be-pushed-information screening module 306 configured to screen the to-be-pushed information according to the screening instruction, and update the to-be-pushed information according to the screening result; and
the to-be-pushed-information sending module 303 includes:
   a to-be-pushed-information sending sub-module 3031 configured to send the updated to-be-pushed information to the slave push terminal.

In the device for pushing information provided by the embodiment of the present invention, it recites that acquiring push feature information from a master push terminal, acquiring to-be-pushed information associated with the master push terminal according to the push feature information, and sending the to-be-pushed information to a slave push terminal associated with the master push terminal and causing the slave push terminal to display the to-be-pushed information. Since the above associated information may be understood as information associated with the user of the master push terminal, the above solution can allow the user of the slave terminal to learn about the information associated with the user of the master push terminal, and thus improve the user experience.

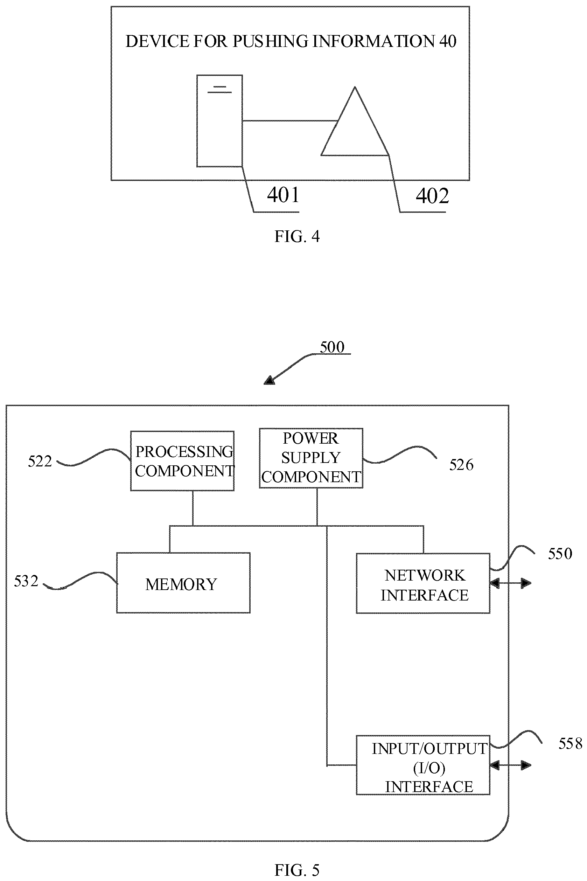

FIG. 4 is a block diagram of a device 40 for pushing information according to an exemplary embodiment. The device 40 for pushing information can be a terminal or a part of the terminal. The device 40 for pushing information includes:
a processor 401; and
a memory 402 for storing instructions executable by the processor 401,
wherein the processor 401 is configured to:
   acquire push feature information from a master push terminal;
   acquire to-be-pushed information associated with the master push terminal according to the push feature information; and
   send the to-be-pushed information to a slave push terminal, and cause the slave push terminal to display the to-be-pushed information, wherein the slave push terminal is associated with the master push terminal.

In an embodiment, the processor 401 may be further configured such that:
the push feature information includes at least one of location information of the master push terminal, personal information of the user of the master push terminal, and other feature information input by the user of the master push terminal.

In an embodiment, the processor 401 may be further configured such that:
the personal information of the user of the master push terminal includes one or more of an occupation of the user of the master push terminal, a company of the user of the master push terminal, a motion state of the user of the master push terminal, and social information of the user of the master push terminal.

In an embodiment, the processor 401 may be further configured such that:
acquiring to-be-pushed information associated with the master push terminal according to the push feature information includes:
periodically searching for real-time news associated with the push feature information, and taking the real-time news as to-be-pushed information.

In an embodiment, the processor 401 may be further configured such that:
acquiring to-be-pushed information associated with the master push terminal according to the push feature information includes:
sending an updated information retrieval instruction to the master push terminal, to instruct the master push terminal to retrieve updated information associated with the push feature information in the master push terminal in response to the updated information retrieval instruction, and sending the updated information to a server; and
receiving the updated information from the master push terminal and taking the updated information as the to-be-pushed information.

In an embodiment, the processor 401 may be further configured such that:
sending the to-be-pushed information to a slave push terminal includes:
receiving a confirmation push instruction from the master push terminal; and
sending the to-be-pushed information to the slave push terminal in response to the confirmation push instruction.

In an embodiment, the processor 401 may be further configured to:
send the to-be-pushed information to the master push terminal, and cause the master push terminal to display the to-be-pushed information;
receive a screening instruction from the master push terminal;
screen the to-be-pushed information according to the screening instruction, and update the to-be-pushed information according to the screening result; and
the processor, configured to send the to-be-pushed information to a slave push terminal may be further configured to:
   send the updated to-be-pushed information to the slave push terminal.

In the device for pushing information provided by the embodiment of the present invention, the device for pushing information may acquire push feature information from a master push terminal, acquire to-be-pushed information associated with the master push terminal according to the push feature information, and send the to-be-pushed information to a slave push terminal associated with the master push terminal and cause the slave push terminal to display the to-be-pushed information. Since the above associated information may be understood as information associated with the user of the master push terminal, the above solution can allow the user of the slave terminal to learn about the information associated with the user of the master push terminal, and thus improve the user experience.

FIG. 5 is a block diagram of a device 500 for pushing information, according to an exemplary embodiment. For example, the device 500 can be provided as a server. The device 500 includes a processing component 522 that further includes one or more processors; and memory resources represented by a memory 532 for storing instructions (such as an application) executable by the processing component 522. An application stored in the memory 532 can include one or more modules each corresponding to a set of instructions. Additionally, the processing component 522 is configured to execute instructions to perform the methods described above.

The device 500 can also include a power supply component 526 configured to perform power management of the device 500, a wired or wireless network interface 550 configured to connect the device 500 to the network, and an input/output (I/O) interface 558. The device 500 can operate based on an operating system stored in the memory 532, such as Windows ServerTM, Mac OS XTM, UnixTM, LinuxTM, FreeBSDTM or the like.

A non-transitory computer readable storage medium, when instructions in the storage medium are executed by a processor of the device 500, enables the device 500 to perform a method for pushing information. The method includes:
acquiring push feature information from a master push terminal;
acquiring to-be-pushed information associated with the master push terminal according to the push feature information; and
sending the to-be-pushed information to a slave push terminal, and causing the slave push terminal to display the to-be-pushed information, wherein the slave push terminal is associated with the master push terminal.

In an embodiment, the push feature information includes at least one of location information of the master push terminal, personal information of the user of the master push terminal, and other feature information input by the user of the master push terminal.

In an embodiment, the personal information of the user of the master push terminal includes one or more of an occupation of the user of the master push terminal, a company of the user of the master push terminal, a motion state of the user of the master push terminal, and social information of the user of the master push terminal.

In an embodiment, acquiring to-be-pushed information associated with the master push terminal according to the push feature information includes:
periodically searching for real-time news associated with the push feature information, and taking the real-time news as to-be-pushed information.

In an embodiment, acquiring to-be-pushed information associated with the master push terminal according to the push feature information includes:
sending an updated information retrieval instruction to the master push terminal, to instruct the master push terminal to retrieve updated information associated with the push feature information in the master push terminal in response to the updated information retrieval instruction, and sending the updated information to a server; and
receiving the updated information from the master push terminal and taking the updated information as the to-be-pushed information.

In an embodiment, sending the to-be-pushed information to a slave push terminal includes:
receiving a confirmation push instruction from the master push terminal; and
sending the to-be-pushed information to the slave push terminal in response to the confirmation push instruction.

In an embodiment, the method for pushing information further includes:
sending the to-be-pushed information to the master push terminal, and causing the master push terminal to display the to-be-pushed information;
receiving a screening instruction from the master push terminal;
screening the to-be-pushed information according to the screening instruction, and updating the to-be-pushed information according to the screening result; and
sending the to-be-pushed information to a slave push terminal includes:
   sending the updated to-be-pushed information to the slave push terminal.

It is noted that the various modules, sub-modules, units, and components in the present invention can be implemented using any suitable technology. For example, a module may be implemented using circuitry, such as an integrated circuit (IC). As another example, a module may be implemented as a processing circuit executing software instructions.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes may be made without departing from the scope thereof. It is intended that the scope of the invention only be limited by the appended claims.

## Claims

1. A method for pushing information, comprising:
acquiring (201) push feature information from a master push terminal;
acquiring (202) to-be-pushed information associated with the master push terminal based on the push feature information; and
sending (203) the to-be-pushed information to a slave push terminal, thereby causing the slave push terminal to display the to-be-pushed information, wherein the slave push terminal is associated with the master push terminal.

2. The method for pushing information according to claim 1, wherein the push feature information comprises one or more of: location information of the master push terminal, personal information of the user of the master push terminal, and other feature information input by the user of the master push terminal.

3. The method for pushing information according to claim 2, wherein the personal information of the user of the master push terminal comprises one or more of: an occupation of the user of the master push terminal, a company of the user of the master push terminal, a motion state of the user of the master push terminal, and social information of the user of the master push terminal.

4. The method for pushing information according to claim 1, wherein acquiring (202) the to-be-pushed information comprises:
periodically searching for real-time news associated with the push feature information; and
designating the real-time news as the to-be-pushed information.

5. The method for pushing information according to claim 1, wherein acquiring (202) the to-be-pushed information comprises:
sending an updated information retrieval instruction to the master push terminal, wherein the updated information retrieval instruction is configured to instruct the master push terminal to retrieve updated information associated with the push feature information in the master push terminal, and send the updated information to a server;
receiving the updated information from the master push terminal; and
designating the updated information as the to-be-pushed information.

6. The method for pushing information according to claim 1, wherein sending (203) the to-be-pushed information to the slave push terminal comprises:
receiving (2031) a confirmation push instruction from the master push terminal; and
sending (2032) the to-be-pushed information to the slave push terminal in response to the confirmation push instruction.

7. The method for pushing information according to claim 1, further comprising:
sending (204) the to-be-pushed information to the master push terminal, thereby causing the master push terminal to display the to-be-pushed information;
receiving (205) a screening instruction from the master push terminal;
screening (206) the to-be-pushed information based on the screening instruction, and updating the to-be-pushed information based on the screening result; and
sending (2033) the updated to-be-pushed information to the slave push terminal.

8. A device for pushing information, comprising:
a push-feature acquiring module (301) configured to acquire push feature information from a master push terminal;
a to-be-pushed-information acquiring module (302) configured to acquire to-be-pushed information associated with the master push terminal based on the push feature information; and
a to-be-pushed-information sending module (303) configured to send the to-be-pushed information to a slave push terminal, thereby causing the slave push terminal to display the to-be-pushed information, wherein the slave push terminal is associated with the master push terminal.

9. The device for pushing information according to claim 8, wherein the push feature information comprises one or more of: location information of the master push terminal, personal information of the user of the master push terminal, and other feature information input by the user of the master push terminal.

10. The device for pushing information according to claim 9, wherein the personal information of the user of the master push terminal comprises one or more of: an occupation of the user of the master push terminal, a company of the user of the master push terminal, a motion state of the user of the master push terminal, and social information of the user of the master push terminal.

11. The device for pushing information according to claim 8, wherein the to-be-pushed-information acquiring module (302) comprises:
a to-be-pushed-information acquiring sub-module (3021) configured to periodically search for real-time news associated with the push feature information, and designate the real-time news as the to-be-pushed information.

12. The device for pushing information according to claim 8, wherein the to-be-pushed-information acquiring module (302) comprises:
an updated-information-retrieval-instruction sending sub-module (3022) configured to send an updated information retrieval instruction to the master push terminal, wherein the updated information retrieval instruction is configured to instruct the master push terminal to retrieve updated information associated with the push feature information in the master push terminal, and send the updated information to a server; and
an updated-information receiving sub-module (3023) configured to receive the updated information from the master push terminal and designate the updated information as the to-be-pushed information.

13. The device for pushing information according to claim 8, wherein to-be-pushed-information sending module (303) comprises:
a confirmation-push-instruction receiving sub-module (3032) configured to receive a confirmation push instruction from the master push terminal; and
a confirmation-push-instruction responding sub-module (3033) configured to send the to-be-pushed information to the slave push terminal in response to the confirmation push instruction.

14. A device for pushing information, comprising:
a processor (401); and
a memory (402) for storing instructions executable by the processor (401),
wherein the processor (402) is configured to perform the steps of the method of any one of claims 1-7.

15. A computer readable storage medium having stored thereon computer instructions, wherein the instructions are executed by a processor to perform the steps of the method of any one of claims 1-7.
